# EUROPÄISCHE PATENTANMELDUNG

(11) **EP 0 829 457 A2**
(43) Veröffentlichungstag der Anmeldung: **18.03.1998**
(21) Anmeldenummer: 97890173.4
(22) Anmeldetag: 03.09.1997
(51) Int. Cl.: C02F 11/12

(54) **Verfahren und Einrichtung zum Trocknen von Schlämmen**

(30) Priorität: 11.09.1996 AT 531/96 U
(71) Anmelder: Binder & Co. Aktiengesellschaft, 8200 Gleisdorf (AT)
(72) Erfinder: Hölbling, Wolfgang, Dr., 8061 St. Radegund (AT)
(74) Vertreter: Kliment, Peter

(57) **Zusammenfassung**

Verfahren zum Trocknen von Schlämmen, insbesondere kommunalen Klärschlämmen, bei dem der Schlamm in einer dünnen Schicht auf eine beheizte Fläche aufgebracht, zum Sieden gebracht und auf einen Feststoffgehalt von ca. 50% Trockensubstanz getrocknet und dieser vorgetrocknete Schlamm einem weiteren Trocknungsprozeß unterworfen wird. Um ein solches Verfahren großtechnisch mit geringem apparativen Aufwand durchführen zu können, ist vorgesehen, daß der vorgetrocknete Schlamm mit bereits getrocknetem Schlamm, der einen Trockensubstanz-Anteil von mindestens 90% aufweist, vermischt, wobei der Feststoffgehalt des vermischten Schlammes auf einen Wert von mehr als 60%, vorzugsweise auf 65 bis 70%, gebracht wird und diese krümelige Masse anschließend in einer dünnen Lage aufgebracht und zur weiteren Trocknung warme Luft in diese Schichte eingeblasen, bzw. diese mit warmer Luft durchblasen wird.

## Beschreibung

Die Erfindung bezieht sich auf ein Verfahren zum Trocknen von Schlämmen, insbesondere von kommunalen Klärschlämmen, gemäß dem Oberbegriff des Anspruches 1.

Als Schlämme sind alle organischen bzw. anorganischen Dispersionen oder Kolloide zu verstehen, deren Lösungsmittelgehalt (in den meisten Fällen H₂O) so hoch liegt, daß eine pumpfähige Substanz vorliegt.

Kommunaler Klärschlamm zählt zu den bekanntesten Ausprägungen des Begriffes "Schlamm", dessen umweltgerechte Aufarbeitung zusätzlich mit großen Problemen und Emotionen behaftet ist.

Zur Aufbereitung von kommunalem Klärschlamm und anderen Schlämmen (Industrieschlämme etc.) sind einige Verfahren bekannt, die zum Teil mechanisch durch Auspressen des Schlammes auf Siebbandpressen den Feststoffgehalt des Schlammes erhöhen. Danach wird der dabei entstehende Kuchen thermisch auf den für eine problemfreie Lagerung notwendigen Feststoffgehalt aufgetrocknet (z. B. in einem Trommeltrockner).

In anderen Verfahren werden die anfallenden Schlämme thermisch behandelt. So ist ein Verfahren bekannt, bei dem der Schlamm in einer beheizten Trockentrommel von zirka 15 bis 25% auf etwa 45 bis 55% Feststoffanteil aufgetrocknet wird. Durch Zugabe von getrocknetem Schlamm wird im Anschluß an die Trockentrommel der Feststoffanteil auf 65 bis 70% erhöht und danach in einem weiteren Trommeltrockner während der weiteren Erhöhung des Feststoffanteiles auf die für die Lagerung notwendige Höhe granuliert.

Ein Verfahren der eingangs erwähnten Art verwendet als erste Stufe der thermischen Behandlung von Schlämmen einen Dünnschichttrockner. In diesem Apparat wird durch fortgesetztes Aufbringen (Verwirbeln und Hinschleudern) des Schlammes an einer beheizten Oberfläche (Innenfläche eines Zylinders) dieser auf einen Feststoffgehalt von 50% gebracht. Anschließend wird diese eingedickte Suspension einem sogenannten Scheibentrockner zugeführt. Der Scheibentrockner besteht im wesentlichen aus einer Achse, die mit beheizten Scheiben bestückt ist, die in einem Trog laufen. Durch diesen Apparat wird der Schlamm bis auf den Feststoffgehalt, der für die Lagerung notwendig ist, aufgetrocknet. Oft wird anschließend das aus dem Scheibentrockner ausgetragene Material noch nachträglich gekühlt.

Bei der mechanischen Aufbereitung ergibt sich das Problem, daß der Schlamm erst in einem späten Aufbereitungsschritt pasteurisiert wird und dadurch die Keime abgetötet werden.

Die bei der thermischen Aufbereitung vielfach eingesetzten Trommeltrockner bauen sehr groß und scheiden große Mengen an Abluft aus, die entsprechend entsorgt werden muß. Der ebenfalls vielfach eingesetzte Scheibentrockner ist als reiner Kontakttrockner (geringer Wärmeübergang) ebenfalls sehr groß bauend und hat dazu den Nachteil, daß bei den zu erreichenden hohen Feststoffgehalten relativ hoher Verschleiß auftritt.

Ziel der Erfindung ist es, diese Nachteile zu vermeiden und ein Verfahren der eingangs erwähnten Art anzugeben, das in der Praxis mit einem geringen apparativen Aufwand durchgeführt werden kann und das aus hygienischer Sicht unproblematisch ist.

Erfindungsgemäß wird dies bei einem Verfahren der eingangs erwähnten Art durch die kennzeichnenden Merkmale des Anspruches 1 erreicht.

Der kommunale Klärschlamm wird mit einem Trockensubstanzgehalt von ca. 20 bis 25% auf beheizten Flächen aufgebracht und dadurch der Feststoffgehalt auf ca. 50% erhöht. Der auf eben ca. 50% Feststoffgehalt eingedickten Schlamm erreicht dabei noch nicht seine klebrige Phase, in der er nur schwer zu handhaben ist. Gleichzeitig wird der Schlamm durch die Erwärmung auf Siedetemperatur pasteurisiert und die enthaltenen Keime weitgehend abgetötet.

Durch das nachfolgende Vermischen des auf einen Feststoffgehalt von ca. 50% eingedickten Schlammes mit getrocknetem Schlamm wird die klebrige Phase des Schlammes durchlaufen und eine krümelige Masse erhalten, die relativ problemlos gehandhabt werden kann und sich leicht in einer dünnen Wirbelschicht oder Fluidbett aufbreiten läßt.

Durch das Einblasen, bzw. Durchblasen von warmer Luft in eine bzw. durch eine solchen Schicht kann das Gemisch problemlos weiter getrocknet und auf einen Feststoffanteil von 90% und mehr gebracht werden.

Durch das erfindungsgemäße Verfahren ergibt sich der Vorteil einer Pasteurisierung des zu behandelnden Schlammes bereits am Beginn der Behandlung, wodurch sich entsprechende Vorteile im Hinblick auf die Hygiene ergeben und eine einfache und problemlose Handhabung des Schlammes, da dieser seine klebrige Phase lediglich bei Vermischung mit Trockenschlamm durchläuft. Dabei entsteht eine krümelige Masse die durch das Einblasen von warmer Luft sehr leicht und einfach getrocknet werden kann, wobei sich aufgrund der krümeligen Struktur des vermischten Schlammes ein sehr guter Wärmeübergang von der warmen Luft auf die Krümel ergibt.

Da sich bei dem einzelnen Krümel die feuchte Schicht außen befindet, kann diese sehr leicht und effizient durch des Durchblasen von warmer Luft durch eine dünne Schichte des vermischten Schlammes getrocknet werden.

Durch die Merkmale des Anspruches 2 ergibt sich der Vorteil, daß Geruchsbelästigungen der Umgebung sehr einfach vermieden werden können.

Ein weiteres Ziel der Erfindung ist es, eine Einrichtung zur Durchführung des erfindungsgemäßen Verfahrens vorzuschlagen.

Ausgehend von einer Einrichtung nach dem Oberbegriff des Anspruches 3 werden die Merkmale gemäß dem Kennzeichen des Anspruches 3 vorgeschlagen.

Durch die vorgeschlagenen Maßnahmen kann der apparative Aufwand zur praxisgerechten Durchführung des Verfahrens sehr klein gehalten werden.

So kann der Mischer als Pflugschar-Mischer ausgebildet sein, der relativ kompakt gebaut werden kann und bei dem eine in einem Mischraum angeordnete, antreibbare Welle mit im wesentlich entlang einer Schraubenlinie angeordneten Messerköpfen bestückt ist. Damit kann der Trockenschlamm sehr einfach in kleine Krümel zerteilt und unter den eingedickten und einen Feststoffanteil von ca. 50% aufweisenden Schlamm gemischt werden. Dabei lagert sich der eingedickte Schlamm an die Krümel des Trockenschlammes an und umgibt diesen. Da der Trockenschlamm dem eingedickten Schlamm Feuchtigkeit entzieht, steigt in der die Krümel des Trockenschlammes einhüllenden Schicht der Feststoffanteil wodurch diese ihre Klebrigkeit verliert und ein leicht handhabbares Granulat entsteht.

Durch die Anordnung eines Schwingtrockners wird einerseits der gute Wärmeübergang zwischen der warmen Luft und den Krümel des vermischten Schlammes ausgenutzt, wobei durch das schwingende sieb auch sichergestellt ist, daß die einzelnen Krümel allseitig der warmen Luft ausgesetzt sind und es zu einer raschen Trocknung kommt. Dabei können die Krümel durch die von unten her das Schwingsieb durchströmende warme Luft auch in Schwebe gehalten werden

Durch die Vermischung des eingedickten Schlammes mit Trockenschlamm im Mischer ist auch sichergestellt, daß die dem Schwingtrockner zugeführte Masse nicht klebrig ist und daher ein problemloser Betrieb des Schwingtrockners sichergestellt ist.

Die Merkmale des Anspruches 4 ermöglichen auf sehr direktem Weg die Zufuhr von Trockenschlamm zum Mischer, wodurch der Transportaufwand minimiert wird.

Die Merkmale des Anspruches 5 ermöglichen eine rasche Kühlung des getrockneten Schlammes, wodurch nach dem Austrag des getrockneten Schlammes aus dem Schwingtrockner eine unkontrollierte Abstrahlung von Wärme durch den Schlamm weitgehend vermieden wird. Außerdem wird auch das Ausdampfen von Geruchsstoffen dadurch wesentlich vermindert.

Durch die Merkmale des Anspruches 6 wird die Abgabe von Geruchs- und Schadstoffen wesentlich verringert.

Bei einer Einrichtung gemäß dem Oberbegriff des Anspruches 7 ergibt sich durch die kennzeichnenden Merkmale des Anspruches 7 der Vorteil, daß der Kessel im nicht-kondensierenden Betrieb gefahren werden kann, wodurch Korrosionsprobleme weitgehend vermieden werden und trotzdem eine weitgehende Ausnutzung der Wärme der Abgase des Brenners gewährleistet ist, da deren Restwärme zur Vorwärmung der dem Schwingtrockner zuzuführenden Luft verwendet wird.

Durch die Merkmale des Anspruches 8 ist es möglich anfallende Schad- und Geruchsstoffe auf einfache Weise aus den Brüden zu entfernen. Dabei wird das anfallende Kondensat zweckmäßigerweise einer Kläranlage zugeführt. Die verbleibenden gasförmigen Schad- und Geruchsstoffe werden beim Durchströmen des Brennraumes des Kessels oxidiert und die dabei entstehenden Stoffe können mit einer üblichen Rauchgasreinigung ausgefiltert werden.

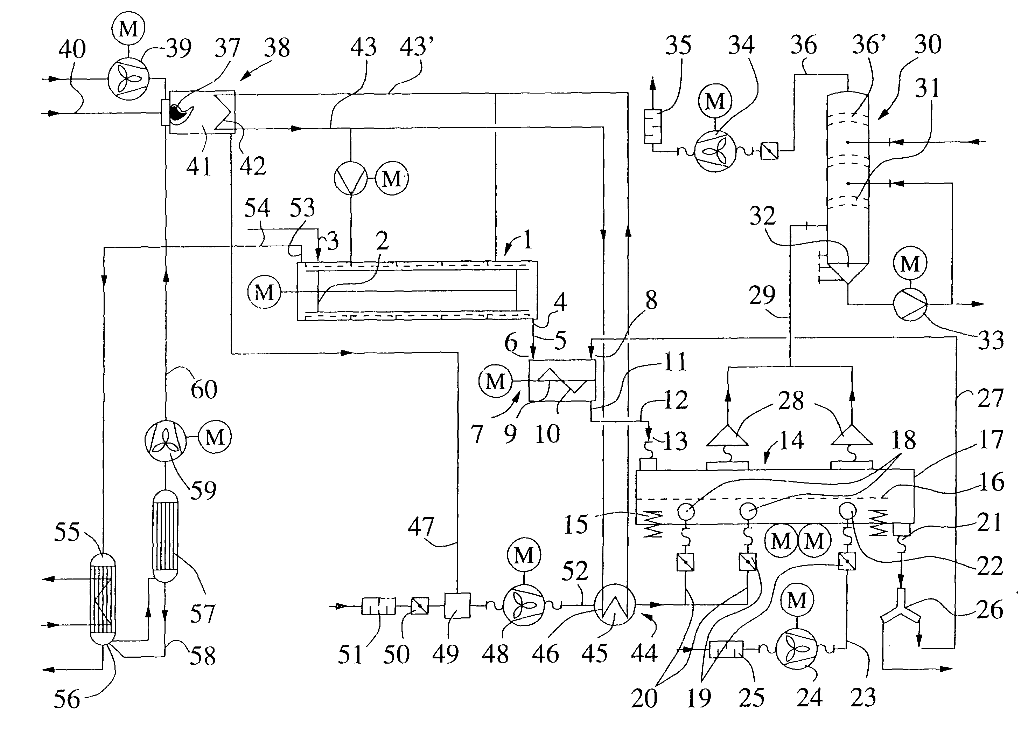

Die Erfindung wird nun anhand der Zeichnung näher erläutert, die schematisch eine erfindungsgemäße Einrichtung zeigt:

Die Einrichtung weist einen üblichen Dünnschichttrockner 1 auf, der eine rotierende Welle 2 aufweist, deren Mantel beheizbar ist und an deren Innenseite der über einen Einlaß 3 zuführbare zu behandelnde Schlamm durch Verwirbelung oder Schleudern in einer dünnen Schicht auftragbar ist. Dabei weist die Innenseite der Trommel 2 eine Temperatur von mehr als 100°C auf, so daß die aufgebrachte Schlammschicht zum Sieden gebracht wird.

Der auf diese Weise auf einen Feststoffgehalt von ca. 50% eingedickte Schlamm gelangt über einen Austrag 4 des Dünnschichttrockners 1, eine Leitung 5 und eine Aufgabeeinrichtung 6 in einen Mischer 7, dessen zweite Aufgabeeinrichtung 8 mit trockenem Schlamm beschickbar ist.

Der Mischer 7 ist zweckmäßigerweise als Pflugscharmischer ausgebildet und weist eine in einem Gehäuse angeordnete antreibbare Welle 9 auf, die mit im wesentlichen entlang einer Schraubenlinie angeordneten Messerköpfen 10 bestückt ist. Mit Hilfe dieser Messerköpfe 10 kann der zugeführte Trockenschlamm zerkleinert und unter den eingedicktem Schlamm gehoben werden. Dadurch werden die Krümel des Trockenschlammes mit eingedicktem Schlamm überzogen und entziehen diesem Feuchtigkeit. Die anhaftende Schicht aus eingedicktem Schlamm durchläuft dabei relativ rasch ihre klebrige Phase, da eben ihr Feststoffanteil rasch von ca. 50% auf ca. 65% bis 70% steigt.

Die im Mischer 7 entstehende krümelige Masse gelangt über einen Austrag 11 des Mischers 7 und eine Leitung 12 zu einer Aufgabeeinrichtung 13 eines Schwingtrockners 14.

Dieser Schwingtrockner 14 weist ein in Federpaketen 15 gehaltenes Gehäuse 17 auf, in dem ein Schwingsieb 16 gehalten ist, wobei das Gehäuse 17 mittels eines Unwuchtantriebes oder eines Exzenterantriebes in Schwingung versetzbar ist. Dabei dient der unterhalb des Siebes 16 liegende Bereich des abgesehen von der Aufgabeeinrichtung 13 und einem Austrag 21 und Luftabsaugungen 28 im wesentlichen dichten Gehäuses 17 als Luftkasten, an dem Luftanschlußstutzen 18, 22 angeordnet sind. Die in den Luftkasten eingebrachte Luft tritt an der Oberseite des Siebes 16 im wesentlichen gleichmäßig verteilt aus.

Im der Aufgabeeinrichtung 13 nahen Bereich sind die Luftanschlußstutzen 18 angeordnet, die über Steuerorgane 19 und Leitungen 20 mit warmer Luft mit einer Temperatur von ca. 200 bis 240°C beaufschlagbar sind.

Im dem Austrag 21 des Schwingtrockners 14 nahen Bereich sind die weiteren Luftanschlußstutzen 22 angeordnet, die über ein Steuerorgan 19 und eine Leitung 23 von einem Gebläse 24 mit kalter Luft beaufschlagbar ist, dem saugseitig ein Schalldämpfer 25 vorgeschaltet ist. Dabei ist im Inneren des Luftkastens eine zwischen den mit warmer Luft beaufschlagten Luftanschlußstutzen 18 und den mit kalter Luft beaufschlagten Luftanschlußstutzen 22 verlaufende Trennwand (nicht dargestellt) angeordnet, um ein Vermischen der kalten mit der warmen Luft im Luftkasten zu verhindern. Zu einer solchen Vermischung kommt es im wesentlichen lediglich nach dem Durchströmen der auf dem Sieb 16 aufgebreiteten krümeligen Masse im oberhalb des Siebes 16 liegenden Bereich des Gehäuses 17.

Da die krümelige Masse aus dem Mischer 7, wie bereits erwähnt nicht klebrig ist, werden die Krümel vom Schwingsieb 16 laufend hochgeworfen und dabei von warmer Luft umströmt, die den Krümeln Feuchtigkeit entzieht. Dabei erfolgt dieser Feuchtigkeitsentzug aufgrund der relativ großen Oberfläche der einzelnen Krümel sehr rasch und der vermischte Schlamm wird rasch auf einen Trockensubstanzanteil von 90% und mehr getrocknet.

Im dem Austrag 21 nahen Bereich erfolgt eine Abkühlung des getrockneten Schlammes durch die in diesem Bereich aus dem Sieb 16 austretenden kalten Luft.

Wie aus der Zeichnung ersichtlich, wird ein Teil des getrockneten Schlammes über eine Abzweigung 26 und eine Leitung 27 der Aufgabeeinrichtung 8 des Mischers 7 zugeführt. Der Rest des getrockneten Schlammes wird einer Abgabe (nicht dargestellt) zugeführt.

Das Gehäuse 17 des Schwingtrockners 14 ist mit Luftabsaugungen 28 versehen, die über eine Leitung 29 mit einem Wäscher 30 verbunden sind. Dieser Wäscher 30 weist in üblicher Weise Rieselböden 31 auf, die von oben nach unten von einem dünnen Wasserfilm durchströmt sind und vom zu reinigenden Gas von unten nach oben durchströmt sind.

Dabei ist der untere Rieselboden 31 vom aus einem Sammler 32 des Wäschers 30 entnommenen und mittels einer Pumpe 33 geförderten Abwasser beaufschlagt, wogegen der obere Rieselboden mit geklärtem Abwasser beaufschlagt ist. Das übrige Abwasser wird einem Klärbecken zugeführt.

Die gereingte Luft wird mittels eines Gebläses 34, dem druckseitig ein Schalldämpfer 35 nachgeordnet ist, über eine Leitung 36 abgesaugt, wobei die Luft nach dem obersten Rieselboden 31 noch einen Zentrifugalabscheider 36 zur Trennung des Wasser-Luftgemisches durchströmt. Geruchsstoffe werden durch Beigabe von chemischen Reagentien in der Waschflüssigkeit gebunden oder absorbiert.

Zur Beheizung der Trommel 2 des Dünnschichttrockners 1 ist ein von einem Brenner 37 beheizter Kessel 38 vorgesehen, wobei der Brenner 37 in üblicher Weise über ein Gebläse 39 mit Luft und über eine Leitung 40 mit Brennstoff versorgbar ist.

Im Brennraum 41 des Kessels 38 ist ein Wärmetauscher 42 angeordnet, dessen Vorlauf- und Rücklaufleitung 43, 43' mit dem Dünnschichttrockner 1 und einem Primärzweig 46 eines Sekundärwärmetauschers 44 verbunden ist, dessen Sekundärzweig 45 ausgangsseitig über die Leitung 20 mit den von Warmluft beaufschlagten Blasdüsen 18 des Schwingtrockners 14 verbunden ist.

Der Kessel 38 wird im nicht kondensierenden Arbeitsbereich betrieben, d.h. die durch den Brenner 37 erzeugten Brenngase werden beim Durchströmen des Wärmetauschers 42 nur soweit abgekühlt, daß diese nicht kondensieren.

Die Brenngase werden nach dem Durchströmen des Wärmetauschers 42 von einem Gebläse 48 über eine Abgasleitung 47 abgesaugt. Dabei ist in der Abgasleitung 47 ein Mischer 49 angeordnet, über dessen zweitem Einlaß über eine Drosselklappe 50 und einem Schalldämpfer 51 Frischluft vom Gebläse 48 mit angesaugt wird. Dadurch geben die Brenngase Wärme an die Frischluft ab, sodaß diese vorgewärmt wird und das Luft-Brenngas-Gemisch über eine Leitung 52 vom Gebläse 48 zum Sekundärwärmetauscher 44, bzw. dessen Sekundärzweig 45 gefördert wird.

Das im Sekundärwärmetauscher 45 erwärmte Brenngas-Luftgemisch durchströmt in weiterer Folge das Schwingsieb 16 des Schwingtrockners 14 und wird im Wäscher 30 gereinigt.

Der Dünnschichtrockner 1 ist mit einer Brüdenabsaugung 53 versehen, die über eine Leitung 54 mit einem Kondensator 55 verbunden ist, in dem die Brüdenluft abgekühlt und das anfallende Kondensat über einen Sammler 56 einer Kläranlage zugeführt wird.

Dem Kondensator 55 ist ein Tropfenabscheider 57 in Reihe nachgeschaltet, dessen Kondensat dem Sammler 56 über eine Kondensatleitung 58 zugeführt wird.

Die verbleibende Brüdenluft wird mittels eines Gebläses 59 über eine Leitung 60 dem Brenner 37 zugeführt und in dessen Flamme oxidiert.

Bei der dargestellten Einrichtung wird daher die Brüdenluft innerhalb der Einrichtung geführt und verbrannt, wodurch es genügt, lediglich die Brenngase des Brenners 37, denen im Mischer 49 Frischluft zugemischt wird und die im Schwingtrockner 14 durch eine Schicht aus krümeliger Schlammasse hindurchgeblasen werden, in dem Wäscher 30 zu reinigen.

Dadurch wird eine Belastung der Umgebung durch Geruchs- und Schadstoffe weitestgehend vermieden.

Außerdem ist auch eine sehr weitgehende Nutzung der eingesetzten Energie gewährleistet.

## Patentansprüche

1. Verfahren zum Trocknen von Schlämmen, insbesondere kommunalen Klärschlämmen, bei dem der Schlamm in einer dünnen Schicht auf eine beheizte Fläche aufgebracht, zum Sieden gebracht und auf einen Feststoffgehalt von ca. 50% Trockensubstanz getrocknet und anschließend mit bereits getrocknetem Schlamm, der einen Trockensubstanz-Anteil von mindestens 90% aufweist, vermischt wird, wobei der Feststoffgehalt des vermischten Schlammes auf einen Wert von mehr als 60%, vorzugsweise auf 65 bis 70%, gebracht wird und dieser vermischte Schlamm einem weiteren Trocknungsprozeß unterworfen wird, **dadurch gekennzeichnet**, daß der vermischte Schlamm, der krümelige Struktur aufweist, in einer dünnen Lage aufgebracht und zur weiteren Trocknung warme Luft in diese Schichte eingeblasen, bzw. diese mit warmer Luft durchblasen wird.

2. Verfahren nach Anspruch 1, **dadurch gekennzeichnet**, daß die beim Sieden des eingesetzten Schlammes anfallenden Brüden auf ca. 85°C abgekühlt und zum Kondensieren gebracht werden und die dabei verbleibenden Gase über eine Flamme geführt und so oxidiert werden.

3. Einrichtung zur Durchführung des Verfahrens nach Anspruch 1 oder 2, bei der einem Dünnschichttrockner (1) ein mit einem Austrag (4) desselben eingangsseitig verbundener und mit einer Aufgabeeinrichtung (8) für Trockenschlamm versehener Mischer (7) nachgeordnet ist, dessen Austrag (11) mit einer Aufgabeeinrichtung eines Trockners verbunden ist, **dadurch gekennzeichnet**, daß der Trockner als ein mit einem Schwingsieb (16) versehener Schwingtrockner (14) ausgebildet ist und unter dem Schwingsieb (16) mindestens eine, nach oben gerichtete Warmluftdüse (18) vorgesehen ist, die vorzugsweise mit Luft mit einer Temperatur von ca. 200 bis 240°C beaufschlagbar ist.

4. Einrichtung nach Anspruch 3, **dadurch gekennzeichnet**, daß ein Austrag (21) des Schwingtrockners (14) mit einer Aufgabeeinrichtung (8) des Mischers (7) verbunden ist.

5. Einrichtung nach Anspruch 3 oder 4, **dadurch gekennzeichnet**, daß der Schwingtrockner (14) in seinem dem Austrag (21) nahen Bereich mit einer unter dem Schwingsieb (16) angeordneten und nach oben gerichteten Düse (22) versehen ist, die mit kalter Luft beaufschlagbar ist.

6. Einrichtung nach einem der Ansprüche 3 bis 5, **dadurch gekennzeichnet**, daß der Schwingtrockner (14) mit einer Luft-Absaugung (28) versehen ist, der ein Wäscher (30) nachgeordnet ist, dessen Ablauf mit einem Klärbecken verbunden ist, wobei ein Teil das ablaufenden Wassers einem Rieselboden (31) des Wäschers (30) rückführbar ist.

7. Einrichtung nach einem der Ansprüche 3 bis 6, bei der zur Beheizung des Dünnschichttrockners (1) ein mit einem in einem Brennraum (41) angeordneten Brenner (37) versehener Kessel (38) vorgesehen ist, dessen Wärmetauscher (42) mit mindestens einer von einer Heizfläche begrenzten Kammer des Dünnschichttrockners (1) verbunden ist, **dadurch gekennzeichnet**, der Brennraum (41) des Kessels (38) mit einem mit einer Frischluftansaugung versehenen Mischer (49) verbunden ist, der einem Sekundärzweig (45) eines primärseitig mit dem Wärmetauscher (42) des Kessels (38) verbundenen Sekundärwärmetauscher (44) vorgeschaltet ist, welcher Wärmetauscher (44) ausgangsseitig mit der bzw. den Blasdüse(n) (18) des Schwingtrockners (14) verbunden ist.

8. Einrichtung nach einem der Ansprüche 3 bis 7, **dadurch gekennzeichnet**, daß der Dünnschichttrockner (1) mit einer Brüdenabsaugung (53) versehen ist, die mit einem Kondensator (55) verbunden ist, dessen Abluftleitung (60) mit dem Brenner (37) des Kessels (38) verbunden ist.
